# EUROPEAN PATENT APPLICATION

(11) **EP 2 477 123 A2**
(43) Date of publication of application: **18.07.2012**
(21) Application number: 12150673.7
(22) Date of filing: 10.01.2012
(51) Int. Cl.: G06F 17/22

(54) **Saveless documents**

(30) Priority: 14.01.2011 US 201161433182 P; 30.06.2011 US 201113174661
(71) Applicant: Apple Inc., Cupertino, CA 95014 (US)
(72) Inventor: Ozer, Ali T., Cupertino, CA California 95014 (US); Piccirelli, Mark Andrew, Cupertino, CA California 95014 (US); Federighi, Craig, Cupertino, CA California 90514 (US); Parker, Anthony Stephan, Cupertino, CA California 95014 (US); Perry, Kevin Scott, Cupertino, CA California 95014 (US)
(74) Representative: Wardle, Callum Tarn

(57) **Abstract**

Saveless documents are disclosed. According to some implementations, a method can include displaying a current version of a document in a first user interface of a computing device, receiving an indication to display previously saved versions of the document, and, in response to receiving the indication, displaying a second user interface having the current version displayed in a first portion of the second user interface and a particular previous version of the document displayed in a sequence of previous versions of the document in a second portion of the second user interface. Methods can include automatically saving documents and creating versions of documents. A method can include automatically restoring the layout of documents on a display. A computer-readable medium and system for performing the methods are also disclosed.

## Description

### CROSS-REFERENCE TO RELATED APPLICATIONS

### BACKGROUND

The disclosure generally relates to document management.

Conventional computing systems allow users to create and edit a variety of documents. For example, word processing applications allow users to create and edit text documents. Image editing applications allow users to create and edit image documents. Spreadsheet applications allow users to create and edit spreadsheet documents. However, users may not save documents frequently enough or at appropriate times. Thus, edits or changes to documents may be lost if a document is unexpectedly closed, for example by the computing system.

### SUMMARY

Saveless documents are disclosed. According to some implementations, a method can include displaying a current version of a document in a first user interface of a computing device, receiving an indication to display previously saved versions of the document, and, in response to receiving the indication, displaying a second user interface having the current version displayed in a first portion of the second user interface and a particular previous version of the document displayed in a sequence of previous versions of the document in a second portion of the second user interface. The method can include receiving a selection of content in the particular previous version of the document, copying the selected content and pasting the selected content into the current version of the document.

According to some implementations, the method can include displaying content of the current version in the first portion of the second user interface and displaying content of the particular previous version in the second portion of the second user interface. The method can include scrolling through content of the particular previous version and displaying content of the particular previous version while scrolling through the content.

According to some implementations, the method can include receiving an indication to replace the current version of the document with the particular previous version and, responsive to the indication, copying the particular previous version of the document, marking the current version as a previous version, and saving the copy of the particular previous version as the current version. The method can include scrolling through the sequence of previous versions of the document until the particular document is displayed. The method can include adding a new previous version of the document to the sequence of previous versions of the document while the sequence of previous versions of the document is displayed in the second portion of the second user interface and displaying the new previous version in the displayed sequence of previous versions of the document.

According to some implementations, a method can include detecting on a computing device a versioning event associated with a document, in response to detecting the versioning event, copying the document and persistently storing the copy as a previous version of the document. According to some implementations, the versioning event is not associated with an explicit indication from a user to create a version of the document. The versioning event can be an opening of the document, a closing of the document, an e-mailing of the document, a printing of the document, a deleting of the document, a long pause in user input to the document, or an attempt to edit a locked document. The method can include generating a label for the previous version indicative of the versioning event and associating the label with the previous version of the document.

According to some implementations, a method can include detecting on a computing device a save event associated with a document and in response to detecting the save event, saving the document. According to some implementations, the save event is not associated with an explicit indication from a user to save the document. The save event can be an elapsed time interval, a pause in user input, a shift of focus away from the document, a closing of the document, a printing of the document, pasting content into the document, deleting content from the document, or formatting the document.

According to some implementations, a method can include displaying one or more documents at one or more corresponding locations on a display of a computing device and storing document layout information comprising one or more identifiers corresponding to the one or more documents and the one or more corresponding locations.

A method can also include detecting an abnormal closure of one or more documents displayed on a computing device, obtaining document layout information comprising one or more identifiers corresponding to the one or more documents and one or more locations for the one or more documents, displaying the one or more documents according to the document layout information.

A non-transitory computer-readable medium storing instructions for performing the methods and a system configured to perform the methods are also disclosed.

Various implementations of the subject matter described here may provide one or more of the following advantages. Saveless documents can prevent a loss of changes made to a document opened in a saveless aware application in the event of an abnormal termination of the application by automatically saving changes to the document. Some implementations allow a user to view, compare, and interact with previous versions of a document while viewing a current version of the document. Some implementations allow a user to revert from a particular version of a document to a previous version of a document and then revert back to the particular version of the document.

Other advantages include relieving users of the burden of manually managing multiple copies of their document files to be able to retrieve old versions that they deemed interesting at some point in the past. Additionally, the user is not bothered by alerts asking what to do with unsaved document changes when closing documents or terminating applications. The user does not have to know and take care to save document changes before causing the documents to be read by another application. For example, if the user drags a documents icon from a folder and drops it in an e-mail message editing window to make an attachment then the attachment will always include all of the changes the user had made to the document up to that point. In other words, from the user's point of view a document as presented in an application window is simply the same thing as the document displayed in the folder, and vice versa.

Details of one or more implementations are set forth in the accompanying drawings and the description below. Other features, aspects, and potential advantages will be apparent from the description and drawings, and from the claims.

### DESCRIPTION OF DRAWINGS

FIG 1 illustrates an example graphical user interface for a "saveless aware" application.

FIG 2 is a block diagram of an example automatic document saving system.

FIG 3 is a block diagram of an example automatic document versioning system.

FIG 4 is a flow diagram of an example process for automatically saving documents.

FIG 5 is a flow diagram of an example process for automatically creating a document version.

FIG 6 illustrates an example graphical user interface for displaying and interacting with document versions.

FIG 7 is a flow diagram of an example process for displaying document versions.

FIG 8 is a flow diagram of an example process for restoring document layouts.

FIG 9 is a block diagram of an example system architecture implementing the features and processes of FIGS. 1-8.

Like reference symbols in the various drawings indicate like elements.

### DETAILED DESCRIPTION

### Saveless Aware Applications

Saveless documents are disclosed. According to some implementations, one or more applications that create, edit, display, or otherwise manipulate or modify documents or other content can be made "saveless aware." Saveless aware (e.g., Auto Save) applications may use or implement an application framework or application programming interface (API) that allows the saveless aware application to automatically save documents. Saveless aware applications may also automatically create and store versions of documents so that a user may later open, display, and/or interact with previous versions of a document. Saveless aware applications can also provide user interface elements (e.g., pull-down menu items or buttons) that allow a user to access, view, and/or interact with one or more previous versions of a document currently opened in the saveless aware application.

Moreover, in some implementations, a saveless aware application automatically saves the positions of open documents on a display and restores the documents to their saved positions, for example, after an abnormal closure of the documents. These and additional features are disclosed in greater detail in the text that follows.

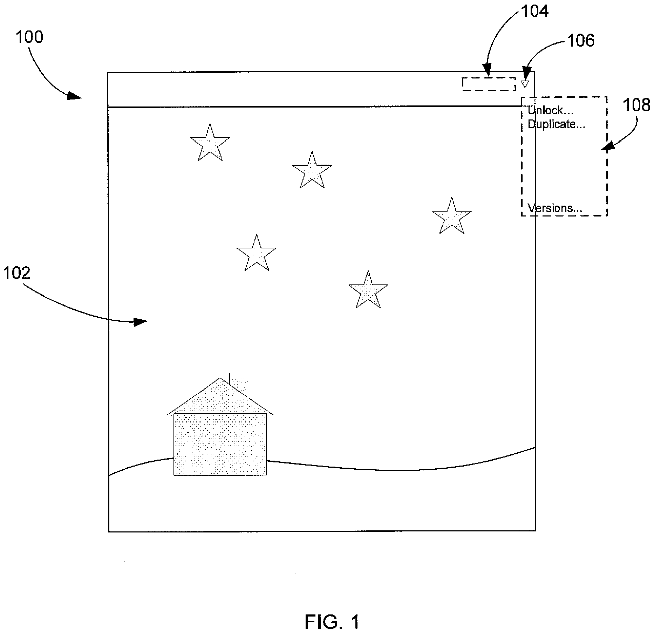

FIG 1 illustrates an example graphical user interface 100 for a "saveless aware" application. Graphical user interface 100 includes a document display area 102. For example, document display area 102 may display documents of a type associated with the particular saveless aware application. For example, if the saveless aware application is a text editor, document display area 102 may display a text document. If the saveless aware application is an image editing application, document display area 102 may display an image. Other type of applications may be made saveless aware. Thus, other types of documents may be displayed in document display area 102.

Graphical user interface 100 also includes a document status area 104. Document status area 104 displays the state or status of the currently opened document displayed in document display area 102. For example, if the displayed document has been modified but not saved, document status area 104 may display a textual indicator (such as "Edited" or "Modified") of the modified status.

In some implementations, document status area 104 may display a "Locked" status. For example, if the opened document displayed in display area 102 has not been edited for a specified period of time (such as an hour, day, year or more), the document may be placed into a "Locked" state by the saveless aware application and the saveless aware application may display the word "Locked" in document status area 104. For example, a user may not be allowed to edit a locked document without first unlocking the document or generating a duplicate of the document. If the document displayed in document display area 104 is not locked or edited, document status area 104 may be empty. For example, document status area 104 may not display any status text if the document is not locked and is unedited.

Graphical user interface 100 also includes a user interface element 106 for accessing menu 108. Menu 108 may include a menu item for unlocking a locked document. For example, if a displayed document is in a locked state, a user may access menu 108 using interface element 106 and select an "Unlock" menu item to unlock and allow editing of a locked document.

A locked document may be duplicated to allow editing of the duplicate document. For example, a user may wish to edit a locked document and also wish to save the currently locked version of the document. To both edit and save the currently locked version of the document, a user may access menu 108 using interface element 106 and select a "Duplicate" menu item. When the "Duplicate" menu item is selected, the saveless aware application copies the locked version and presents the copy to the user so that the user can edit the copy.. In some implementations, a user is automatically prompted to unlock or duplicate a locked document when a user attempts to edit a locked document. For example, if a user attempts to edit a locked document a pop-up menu may be displayed that prompts the user to unlock or duplicate the current locked version of the document.

A document may be locked by a user. For example, a user may select a "Lock" user interface element to cause the document to be locked. A document may also be locked if the location where the document is stored is no longer accessible. For example, if the document is stored on a network storage device and the network storage device is no longer accessible, the document may be placed into a locked state. If a user attempts to edit the locked document, the user may be prompted to unlock the document and provide an alternate storage location for the document. Once an alternate storage location is provided by the user, the locked document may be duplicated and stored at the alternate location and the user may be allowed to proceed with editing the duplicate unlocked document.

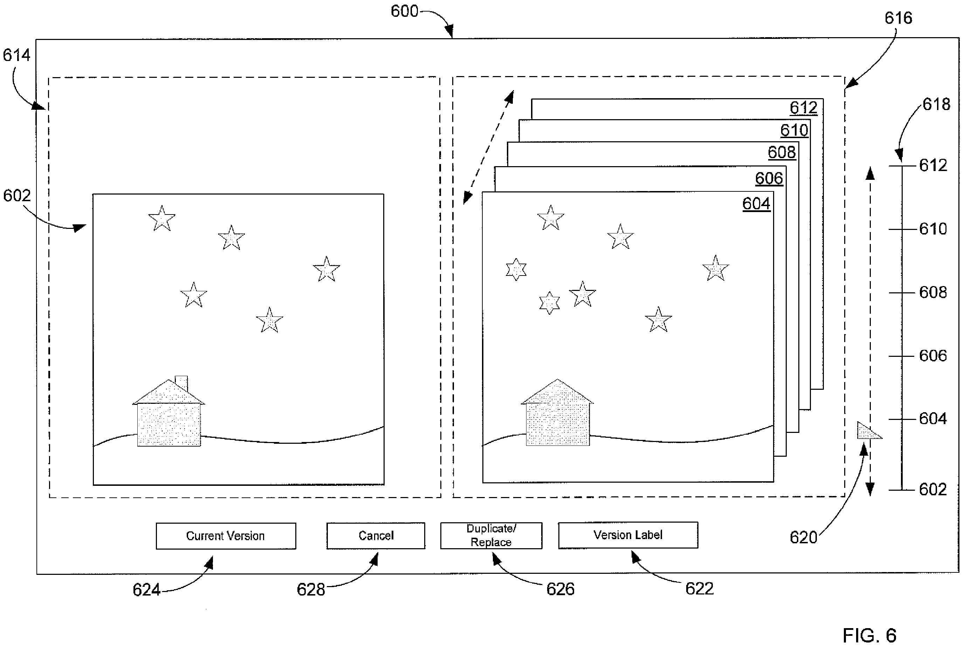

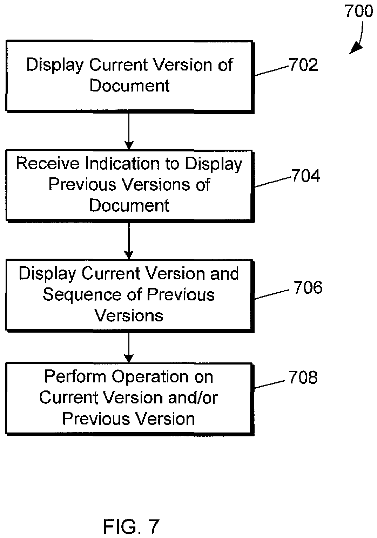

Menu 108 may allow a user to access previous versions of the currently displayed document. For example, to access previous versions of the currently displayed document, a user may access menu 108 using interface element 106 and select a "Versions" or "Revisions" menu item. In response to a user selecting the "Revisions" menu item, a version management interface may be displayed, as disclosed in detail below with reference to FIG 6 and FIG 7.

### Automatic Document Saving

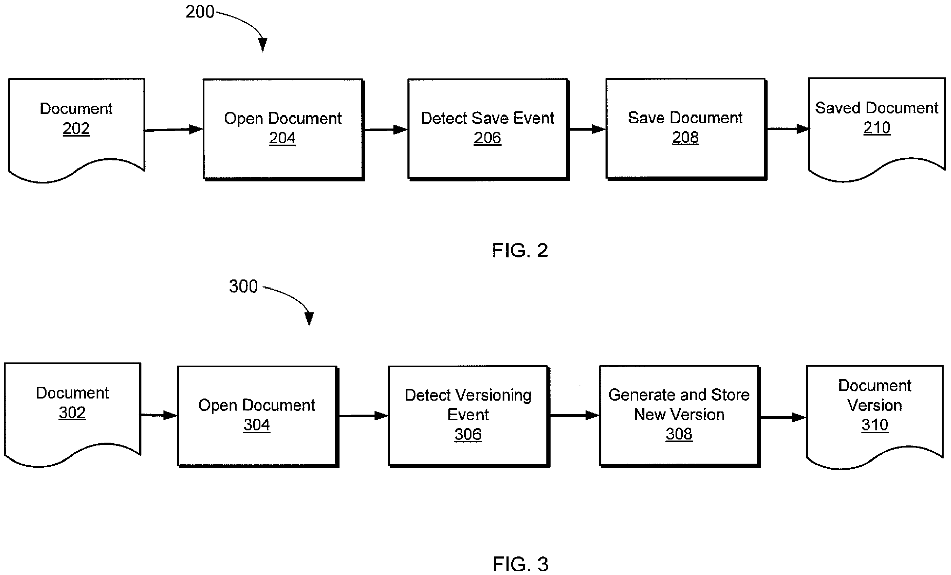

FIG 2 is a block diagram 200 illustrating an example of automatic document saving. A "saveless aware" application executed by a computer system can be configured to automatically save a document opened in the application in response to detecting one or more save events on the system. At step 204 of diagram 200, document 202 may be opened in a saveless aware application on a computer system.

At block 206, a save event may be detected by the saveless aware application executing on the system. A save event can include, for example, an elapsed time interval, a pause in user input, a shift of focus away from the document, a closing of the document, a printing of the document, pasting content into the document, deleting content from the document, or formatting the document. For example, the saveless aware application may be configured to automatically save the document every five minutes.

If a user is typing into a text document and pauses (e.g., to think, to get a cup of coffee, or to proofread), the saveless aware application may detect the pause in user input and automatically save the document. If a user stops interacting with the document window and begins interacting with another window or application open on the computer system, the saveless aware application may detect the shift in focus (or loss of focus on the document) and save the document. When a user closes a document, prints a document, pastes content into a document, deletes content from a document, or formats the document, the saveless aware application may detect these changes to the document and identify them as save events.

In some implementations, a saveless aware application may be configured to save a document based on a time interval. For example, when the time interval expires, the document may be saved. If the user interacts with the document in some way, by typing or scrolling for example, then the automatically save may be delayed for a period of time so that the save operation does not occur while the user is interacting with the document. Thus, automatically saving a document while the user is actively using the application or document may be avoided.

In some implementations, the period of time to delay the auto saving may be determined based on the following algorithm. The variable 'x' represents the time interval (in seconds) specified by the application to wait for automatic saves. If a time interval value is not specified for an application a default time interval may be used (e.g., 30 seconds). The variable 'y' represents the maximum amount of time between automatic saves. For example, the maximum amount of time between automatic saves may be 5 minutes; if five minutes elapses without a save, an automatic save may be performed.

According to some implementations, the following algorithm may be used. For example, when a change in a document is detected, a timer may be started to run for x seconds. If a user interacts with the document, the timer may be delayed for x seconds. If the time since an automatic save is greater than y*(1/2), the timer may be delayed for x/2 seconds. If the time since an automatic save is greater than y*(7/8), the timer may be delayed for x/8 seconds. If the time calculated will put the next automatic save more than y seconds after the previous automatic save, clip the time so there will be no more than y seconds since the previous automatically save.

An automatic save may be triggered by other save events, such as switching to another application, another application indicating that it wants to read the most current content of this file (coordinated read), before operations that change the content of the file dramatically (e.g., reverting), or before the user puts their computer to sleep, for example.

In some implementations, saveless aware applications may automatically save documents based on power characteristics of the computing device on which the saveless aware application is executing. In some implementations, the frequency of automatic saves may be based on whether the power source is a battery or wall power. For example, if the power source is a battery, automatic saves may be performed less frequently than if the power source is wall power in order to make the battery last longer.

In some implementations, automatic saves may be based on the amount of power remaining in a battery that powers the computing device. For example, a saveless aware application may automatically save a file when the percent charge remaining in a computer's battery reaches a small number (e.g., 5% or 10% charge remaining) or when a low battery notification is received so that changes to a document will not be lost if the battery expires. In some implementations, automatic saves may be performed less and less frequently as the power remaining in the battery decreases.

Saveless aware applications may also coordinate with other system events to more efficiently take advantage of other disk or CPU activity. For example, a saveless aware application may notice when the CPU usage of a computer reaches some small percentage (e.g., 20% or 30% CPU usage) and take advantage of the low CPU usage to automatically save an opened document. In some implementations, saveless aware applications may group a set of document saves to improve power efficiency or take advantage of underutilized system resources (e.g., low CPU, memory, or battery usage).

At block 208, the document 202 may be saved by the saveless aware application running on the computer system resulting in saved document 210. For example, if a save event is detected, the saveless aware application may automatically save the document so the user will not lose the changes made to the document if the document or saveless aware application experiences an abnormal termination or closure that might otherwise cause the changes to the document 202 to be lost. The saved document 210 can be saved, or stored, on a local storage device, such as a rotating disk or solid-state medium. Saved document 210 can be saved, or stored, on a remote storage device, such as a network server or other network storage. In some implementations, the document 202 is saved only if the saveless aware application determines that there have been changes made to the document 202 since the last save. In some other implementations, the saveless aware document saves the document 202 when a save event is detected regardless of whether changes have been made to the document 202.

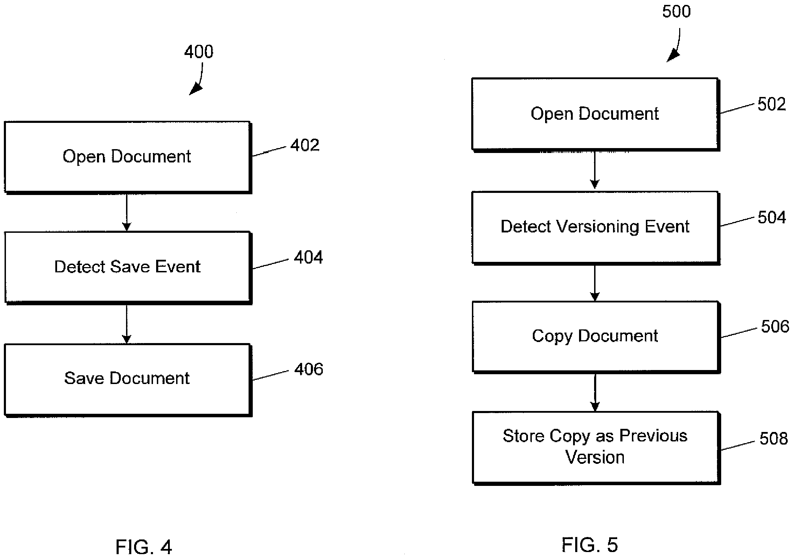

FIG 4 is a flow diagram of an example process 400 for automatically saving documents. The process 400 can be performed, for example, using one or more computing devices. At step 402 a document is opened. For example, a saveless aware application may open and display a document, as described with reference to FIG 1. At step 404, a save event is detected. For example, a save event, such as those described with reference to FIG 2, may be detected. Detection of the save event may trigger the saveless aware application to save the opened document at step 406. In some implementations, a document will only be saved if the document has been edited, modified, or changed since the last time the document was saved. In some other implementations, the document will be saved regardless of whether any changes have been made to the document since the last time the document was saved.

### Automatic Document Versioning

FIG 3 is a block diagram illustrating an example of automatic document versioning. A "saveless aware" application executed by a computer system may be configured to automatically create and save a version of a document opened in the application in response to detecting one or more versioning events on the system. At block 304 of diagram 300, document 302 is opened. For example, document 302 may be opened in a saveless aware application on a computer system.

At block 306, a versioning event is detected. A versioning event can include, for example, an opening of the document, a closing of the document, an e-mailing of the document, a printing of the document, deleting the document, a long pause in user input to the document (e.g., a pause of one hour or more), or an attempt to edit a locked document. For example, if a user e-mails a document, the e-mailed version of the document may be stored so that the user can see which version of the document was e-mailed. As another example, a user may be working on a document then go to lunch for an hour. The hour break may trigger a version of the document to be generated and stored. A versioning event may be defined by longer or shorter pauses in user input.

According to some implementations, a version of a document is generated and stored in response to a user attempting to edit a locked document. For example, if a user opens a document that has not been edited for a specified period of time (a day, a week, a month, etc.) the document may be opened as a locked document. If the user attempts to edit the locked document, a version of the document may be generated and stored so that the user can review the previous version of the document. The version of the locked document can be automatically generated in response to the user's attempt to edit the locked document or the user may be prompted to create the duplicate version of the document.

According to some implementations, reverting to a previous version of the document causes a version of the document to be generated and stored. For example, if a user reverts to a previous version of the document, the contents of the current version of the document may be preserved as a version of the document before the reverting to the previous version. Naming or renaming a document may cause a version of the document to be generated and stored. For example, a new version of a document may be generated and stored in response to naming the document for the first time. Locking the document may cause a version of the document to be generated and stored. For example, in response to a user manually locking the document, a new version of the locked document may be generated and stored.

According to some implementations, deleting the document from a storage device (hard drive) causes a version of the document to be generated and stored. For example, a deletion operation can be intercepted (e.g., using a kernel hook) and a copy of the document generated prior to completing the deletion operation.

The versioning events may be configurable. For example, a user may be able to configure a saveless aware application to generate and store versions of a file based on a subset of the versioning events listed above. A user may be able to specify new or additional versioning events based on user provided criteria.

According to some implementations, a user may explicitly generate and store a version of a document. For example, a user may select a user interface element to save a version of the document. In some implementations, a user may save a version with an associated comment. For example, a user may explicitly save a version of the document and provide a comment for the version. In some implementations, a commented version of a document may be kept until the user explicitly deletes it.

At block 308, a new version of the document is generated and stored. For example, in response to detecting a versioning event, a saveless aware application may automatically generate a copy of the document and store the copy as a previous version of the document. As a result, document version 310 is generated.

Multiple identical versions of a document may be generated. For example, successive openings of a document without intervening edits may produce multiple identical versions of the document. Alternatively, in some implementations, new versions are only generated if there is some change made relative to the previous version. Limits may be placed on the number of identical versions of a document. For example, the system may be configured such that a maximum of three identical versions of document may be stored.

According to some implementations, versions of a document may be intelligently pruned or purged from the version store. For example, the version store is a collection of document versions. The version store may be pruned so that the most interesting (e.g., most important) versions of the document are preserved and the less interesting (e.g., less important) versions of the document are deleted. A version of a document may be marked as purgeable (prunable). A purgeable or prunable version of a document may be deleted at any time.

The following rules may be used to determine which documents are purgeable or prunable. For example, versions with comments are never automatically purged. The user may delete commented versions manually, if desired. At least one version of a document per hour for the past day is retained in the version store. At least one version of a document per day for the past month is retained in the version store. At least one version of a document per week for document versions older than one month is retained in the version store. Versions that represent the current working document the last two times it was opened are retained in the version store. Versions that represent an explicit user action (e.g., reverting, renaming, locking) may be retained over versions that were created automatically. Versions of a document that do not fall into one of the categories above may be marked as purgeable or prunable.

FIG 5 is a flow diagram of an example process 500 for automatically creating a document version. At step 502 a document is opened. For example, a document may be opened in a saveless aware application. At step 504, a versioning event is detected. For example, the versioning event can be one of the versioning events described above with reference to FIG 3. At step 506, a copy of the document is generated. For example, in response to detecting a versioning event, a copy of the document may be generated. The copy of the document may be a copy of the entire document. Alternatively, the copy of the document may refer only to storing the differences between the document and a previous version of the document. At step 508, the copy is stored as a previous version of the document. For example, the copy may be stored as a version of the document and the user may continue editing the currently opened and displayed version of the document. A previous version of the document may be later retrieved and viewed by a user using the version management interface disclosed below, for example. Where only differences between document versions are stored, a particular version of the document may be reconstructed based on the stored differences.

### Version Management Interface

FIG 6 illustrates an example graphical user interface 600 for displaying and interacting with document versions. For example, user interface 600 may be displayed in response to a user selecting the "Revisions" or "Versions" menu item, for example, from menu 108 of FIG 1 or another menu.

A current working document 602 (e.g., the document currently open in the saveless aware application) is represented in area 614 of user interface 600. For example, area 614 may be positioned in user interface 600 on the right, left, top or bottom of interface 600. When interface 600 is invoked (e.g., though a user selection in menu 108), current working document 602 may be animated to move from its current position on the display to area 614. Label 624 may be displayed proximate to area 614 and current working document 602. Label 624 may display identifying information associated with current working document 602 (e.g., labeling document 602 as the current version of the document).

Revisions to, or versions of, current working document 602 are displayed in area 616. For example, versions of current working document 602 that were automatically generated as described with reference to FIG 2 and FIG 4 may be displayed in area 616. Document versions, or revisions, 604-612 can be generated by a single application or multiple different applications that allow a user to edit and save versions of current working document 602.

Document revisions may be retrieved from a local storage device or a network storage device. Document revisions may be obtained from a document archive or file backup location. User interface 600 may obtain document versions from one or more archiving or file backup applications and/or storage locations (e.g., a network file server or local storage device).

When user interface 600 is invoked, document versions 604-612 may be animated to shuffle into view into user interface area 616. Document revisions 604-612 may be displayed in area 616 in chronological or reverse chronological order. For example, revisions 604-612 may be displayed in order based on the time that a particular revision or version was generated. Documents 604-612 may be displayed as a sequence. For example, the sequence of documents 604-612 may be displayed as a stacked sequence of applications as displayed in FIG 6.

While the sequence of document versions 604-612 are displayed, newly generated document versions may be added to the displayed sequence. For example, if another application generates a new version associated with current working document 602, the new version may be added to the displayed sequence of document versions 604-612. Alternatively, in another example, if the user replaces the current version of the document with a previous version of the document, the replaced current version of the document may be added to the displayed sequence of previous versions of the document for later reference.

Label 622 may be displayed proximate to area 616 and document versions 604-612. Label 622 may display identifying information associated with a selected document version (e.g., document version 604) displayed at the front of document version sequence 604-612. For example, the version label may indicate the date that the selected version was generated or the version generating event (e.g., document e-mailed, document printed, etc.).

Document versions 604-612 are manipulable. For example, a user may scroll through the displayed sequence of document versions 604-612. The user may move through the documents by causing the documents to appear to move into the foreground and background of the display. For example, in FIG 6, document version 604 is the currently selected document version because it is at the forefront of the sequence of document versions and its content is visible. If a user wishes to select, view, and/or manipulate another document version, such as version 608, the user may scroll through the sequence of document versions until version 608 is at the front of the sequence and its contents are visible.

By scrolling back to version 608, document versions 604 and 606 may appear to disappear into the foreground (toward the user) and off the display. If document version 608 is selected and is displayed at the front of the sequence of documents 604-612 (only versions 608-612 may be displayed when 608 is selected) and the user wishes to view the no longer visible version 606, the user may scroll back through the list. For example, to view document version 606, the sequence 604-616 may be animated to move into the background of user interface 600. Document versions 608-612 may move into the background of user interface 600 and version 606 may be added to the front of the displayed sequence of document versions.

Scrolling through the sequence of documents may be done by direct input from an input device (e.g., keyboard arrow keys or mouse wheel) or by manipulating timeline 618 or timeline position indicator 620. For example, a user may use a cursor to indicate a position on timeline 610 (e.g., by clicking on a position on timeline 616). In response to the cursor input on timeline 610, a document version corresponding to the indicated position may be selected and displayed at the front of the sequence of versions displayed in area 616. For example, if a user indicates a position on timeline 618 corresponding to document version 610, document version 610 may be selected and displayed at the front of the sequence of versions 604-612.

A user may indicate a position on timeline 618 using timeline position indicator 620. For example, a user may cause position indicator 620 to move along timeline 618 (e.g., using a mouse or keyboard input) to a position on the timeline corresponding to version 612 thereby causing document version 612 to be selected and displayed at the front of the document version sequence. In some implementations, the user selection of the position indicator can cause a magnification of the timeline (e.g., with individual hashes representing individual versions when there are a large number of versions).

The content of a currently selected document version (e.g., document version 604) may be viewed and manipulated. For example, the contents of a selected document version (previous version of the current working document) may be displayed and scrolled through so that a user can review the contents of previous versions of the current working document. Previous versions of the current working document cannot be edited but particular content may be selected and copied to a location within the current working document 602.

For example, a user may make edits to a document and then decide to revert to a previous version of the document. To do so, the user may select a previous version of the document by scrolling through the sequence of versions 604-612. Once a previous version (e.g., version 610) is selected and displayed at the front of the sequence of versions, the user may duplicate the previous version 610 and make previous version 610 the current working version of the document. For example, the user may select user interface element 626 to make the selected previous version of the document the current working version. For example, selection of user interface element 626 may restore a previous version 610 of a document as the current working version of the document. The user may then edit the current working document 602 restored from previous version 610. The current working document 602 may be saved as a previous version before being replaced as the current working document by duplicate version 610. Thus, a user can revert from a current working version of a document back to a previous version of the document and back (or forward) to the current working version of the document because a version of the document is saved at each significant change or event associated with the document.

A user may interact with a selected previous version (e.g., version 604) of current working document 602. For example, a user may select and copy content from previous document version 604 and paste the content into current working document 602. For example, for a text document version the user can select a particular portion of text (e.g., a sentence or paragraph) and copy that selection to a specific location within the current working document 602. The user can interact with a selected previous version and perform any editing operations on the content of the previous version of the document that does not cause changes to the previous version of the document. For example, previous versions of a document may be read-only.

A user may close user interface 600 by selecting user interface element 628. For example, user interface element 628 may be a close or cancel button that causes user interface 600 to close and interface 100 of FIG 1 to be displayed. In some implementations, a user selection of user interface element 626 may cause user interface 600 to close. For example, user interface element 626 may be a replace button that, when selected, causes the current version of a document to be replaced by a selected previous version of the document, causes interface 600 to close, and causes interface 100 of FIG 1 to be displayed having the selected previous version of the document displayed.

FIG 7 is a flow diagram of an example process 700 for displaying document versions. At step 702 a current version of the document is displayed. For example, the current working version of a document may be displayed in an interface of a saveless aware application (e.g., interface 100 of FIG 1). At step 704, an indication to display previous versions of the document is received. For example, a user may select a user interface element or a menu item that indicates that the user wishes to view previous versions of the current working version of the document.

At step 706, the current working version of the document and a sequence of previous versions of the document are displayed. For example, by displaying both the current working version of the document and the previous versions of the document at the same time on the same interface, a user may compare previous versions of the document to the current working version of the document. At step 708, an operation may be performed on the current working version of the document and/or previous versions of the document. For example, the user may copy content from previous versions of the document and paste the copied content into the current working version.

### Automatic Document Layout Restoration

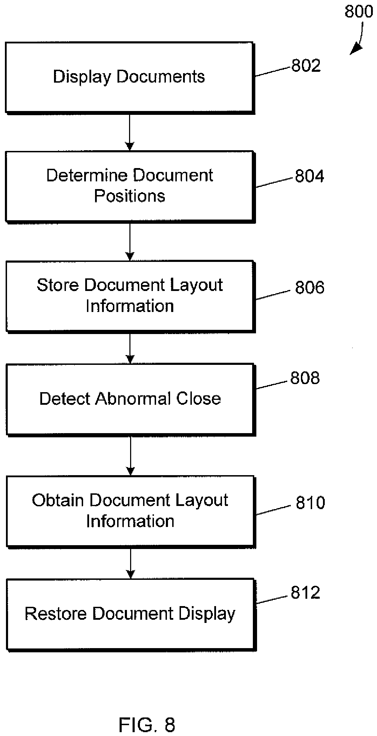

FIG 8 is a flow diagram of an example process 800 for restoring document layouts. At step 802 one or more documents are displayed. For example, multiple documents may be displayed on a display of a computing device. The documents may be displayed in multiple document windows of a single application. Alternatively, the documents may be displayed in multiple document windows of multiple applications. The applications may be saveless aware applications, as described above.

At step 804, the positions of the displayed documents are determined. For example, the coordinates of the document windows on the display may be determined. The coordinates may be determined based on a Cartesian coordinate system. For example, the coordinates may be determined as (x, y) coordinates that define locations on the display.

At step 806, document layout information is stored. For example, document layout information may include identifiers for the displayed documents and corresponding display locations (e.g., x,y coordinates) for the documents.

At step 808, an abnormal close of the documents or applications is detected. For example, if a computing device upon which an application is executing crashes, or the power supply to the computer is interrupted, the computing device may stop functioning and the applications executing on the computing device may terminate abnormally. As another example, if a user executes a hard-kill on an application, the application may terminate abnormally. That is, in response to a hard-kill or crash of the computing device, the application is not able to process its normal shutdown sequence of instructions and, therefore, terminates abnormally.

An abnormal termination of an application can be indicated and detected in a variety of ways. For example, an application may have an associated application status file stored on a computing device. The application status file may indicate the state of the application at various points in processing and may indicate that the normal shutdown sequence of the application was not performed. The status file may read to determine whether an abnormal termination occurred. Alternatively, an application may simply create a file on a computer system when the application is executing and remove the file during normal shutdown of the application. If the file still exists on the computer system when the application is started, the application did not process a normal shutdown and an abnormal termination may be detected.

At step 810, document layout information is obtained. For example, upon detecting an abnormal close at step 808, the document layout information stored at step 806 may be obtained. The document layout information may include document identifiers that allow the application to locate the previously displayed documents in storage. The document layout information may also include location information that allows the application to display the identified documents at their previous locations on the display of the computing device.

At step 812, document display is restored. For example, based on the document layout information obtained in step 810, the previously displayed documents may be restored to their previous display locations on the display of the computing device.

Implementations are also described in Appendix A and Appendix B attached hereto.

### Example System Architecture

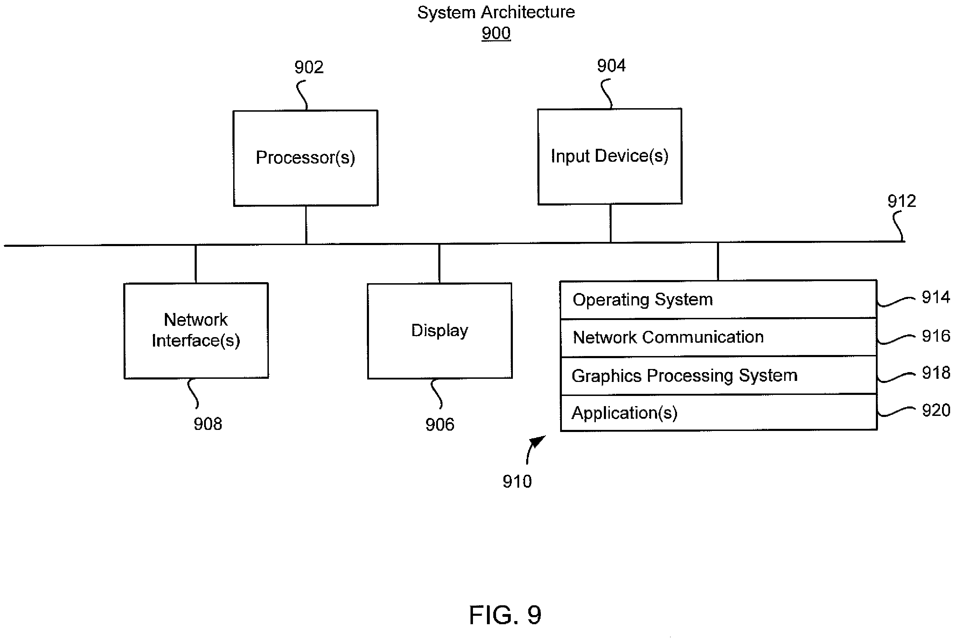

FIG 9 is a block diagram of an example system architecture 900 for implementing the features and processes of FIGS. 1-8. The architecture 900 can be implemented on any electronic device that runs software applications derived from compiled instructions, including without limitation personal computers, servers, smart phones, media players, electronic tablets, game consoles, email devices, etc. In some implementations, the architecture 900 includes one or more processors 902, one or more input devices 904, one or more display devices 906, one or more network interfaces 908 and one or more computer-readable mediums 910. Each of these components can be coupled by bus 912.

Display device 906 can be any known display technology, including but not limited to display devices using Liquid Crystal Display (LCD) or Light Emitting Diode (LED) technology. Processor(s) 902 can use any known processor technology, including but are not limited to graphics processors and multi-core processors. Input device 904 can be any known input device technology, including but not limited to a keyboard (including a virtual keyboard), mouse, track ball, and touch-sensitive pad or display. Bus 912 can be any known internal or external bus technology, including but not limited to ISA, EISA, PCI, PCI Express, NuBus, USB, Serial ATA or FireWire. Computer-readable medium 910 can be any medium that participates in providing instructions to processor(s) 902 for execution, including without limitation, non-volatile storage media (e.g., optical disks, magnetic disks, flash drives, etc.) or volatile media (e.g., SDRAM, ROM, etc.).

Computer-readable medium 910 can include various instructions 914 for implementing an operating system (e.g., Mac OS®, Windows®, Linux). The operating system can be multi-user, multiprocessing, multitasking, multithreading, real-time and the like. The operating system performs basic tasks, including but not limited to: recognizing input from input device 904; sending output to display device 906; keeping track of files and directories on computer-readable medium 910; controlling peripheral devices (e.g., disk drives, printers, etc.) which can be controlled directly or through an I/O controller; and managing traffic on bus 912. Network communications instructions 916 can establish and maintain network connections (e.g., software for implementing communication protocols, such as TCP/IP, HTTP, Ethernet, etc.).

A graphics processing system 918 can include instructions that provide graphics and image processing capabilities. For example, the graphics processing system 918 can implement the resampling processes, as described with reference to FIGS. 1-8.

Application(s) 920 can be an image processing application or any other application that uses the resampling processes described in reference to FIGS. 1-8, such as a photo or video editor. The resampling processes can also be implemented in operating system 914.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network. The relationship of client and server arises by virtue of computer programs running on the respective computers and having a client-server relationship to each other.

One or more features or steps of the disclosed embodiments can be implemented using an API. An API can define on or more parameters that are passed between a calling application and other software code (e.g., an operating system, library routine, function) that provides a service, that provides data, or that performs an operation or a computation.

The API can be implemented as one or more calls in program code that send or receive one or more parameters through a parameter list or other structure based on a call convention defined in an API specification document. A parameter can be a constant, a key, a data structure, an object, an object class, a variable, a data type, a pointer, an array, a list, or another call. API calls and parameters can be implemented in any programming language. The programming language can define the vocabulary and calling convention that a programmer will employ to access functions supporting the API.

In some implementations, an API call can report to an application the capabilities of a device running the application, such as input capability, output capability, processing capability, power capability, communications capability, etc.

A number of implementations have been described. Nevertheless, it will be understood that various modifications may be made. For example, other steps may be provided, or steps may be eliminated, from the described flows, and other components may be added to, or removed from, the described systems. Accordingly, other implementations are within the scope of the following claims.

## Claims

1. A method comprising:
displaying a current version of a document in a first user interface of a computing device;
receiving an indication to display previously saved versions of the document;
in response to receiving the indication, displaying a second user interface having a first portion and a second portion, the current version of the document displayed in the first portion of the second user interface and a particular previous version of the document displayed in a sequence of previous versions of the document in the second portion of the second user interface.

2. The method of claim 1, further comprising:
receiving a selection of content in the particular previous version of the document;
copying the selected content;
pasting the selected content into the current version of the document displayed in the first portion of the second user interface.

3. The method of claim 1, further comprising:
displaying content of the current version of the document in the first portion of the second user interface;
displaying content of the particular previous version of the document in the second portion of the second user interface.

4. The method of claim 1, further comprising:
scrolling through content of the particular previous version;
displaying content of the particular previous version while scrolling through the content.

5. The method of claim 1, further comprising:
receiving an indication to replace the current version of the document with the particular previous version;
responsive to the indication, copying the particular previous version of the document, marking the current version as a previous version, and saving the copy of the particular previous version as the current version.

6. A computer-readable storage medium including one or more instructions which, when executed by at least one processor, causes:
displaying a current version of a document in a first user interface of a computing device;
receiving an indication to display previously saved versions of the document;
in response to receiving the indication, displaying a second user interface having a first portion and a second portion, the current version of the document displayed in the first portion of the second user interface and a particular previous version of the document displayed in a sequence of previous versions of the document in the second portion of the second user interface.

7. The computer-readable storage medium of claim 6, wherein the instructions comprise instructions that cause:
receiving a selection of content in the particular previous version of the document;
copying the selected content;
pasting the selected content into the current version of the document displayed in the first portion of the second user interface.

8. The computer-readable storage medium of claim 6, wherein the instructions comprise instructions that cause:
displaying content of the current version of the document in the first portion of the second user interface;
displaying content of the particular previous version of the document in the second portion of the second user interface.

9. The computer-readable storage medium of claim 6, wherein the instructions comprise instructions that cause:
scrolling through content of the particular previous version;
displaying content of the particular previous version while scrolling through the content.

10. The computer-readable storage medium of claim 6, wherein the instructions comprise instructions that cause:
receiving an indication to replace the current version of the document with the particular previous version;
responsive to the indication, copying the particular previous version of the document, marking the current version as a previous version, and saving the copy of the particular previous version as the current version.

11. A system comprising:
one or more processors;
a computer-readable storage medium storing one or more instructions which, when executed by the one or more processors, causes:
displaying a current version of a document in a first user interface of a computing device;
receiving an indication to display previously saved versions of the document;
in response to receiving the indication, displaying a second user interface having a first portion and a second portion, the current version of the document displayed in the first portion of the second user interface and a particular previous version of the document displayed in a sequence of previous versions of the document in the second portion of the second user interface.

12. The system of claim 11, wherein the instructions comprise instructions that cause:
receiving a selection of content in the particular previous version of the document;
copying the selected content;
pasting the selected content into the current version of the document displayed in the first portion of the second user interface.

13. The system of claim 11, wherein the instructions comprise instructions that cause:
displaying content of the current version of the document in the first portion of the second user interface;
displaying content of the particular previous version of the document in the second portion of the second user interface.

14. The system of claim 11, wherein the instructions comprise instructions that cause:
scrolling through content of the particular previous version;
displaying content of the particular previous version while scrolling through the content.

15. The system of claim 11, wherein the instructions comprise instructions that cause:
receiving an indication to replace the current version of the document with the particular previous version;
responsive to the indication, copying the particular previous version of the document, marking the current version as a previous version, and saving the copy of the particular previous version as the current version.
